# EUROPEAN PATENT APPLICATION

(11) **EP 4 283 863 A1**
(43) Date of publication of application: **29.11.2023**
(21) Application number: 23174311.3
(22) Date of filing: 19.05.2023
(51) Int. Cl.: H02S 20/23, E04D 3/24, E04D 3/36, F24S 25/40, F24S 25/615, H02S 20/26, H02S 20/22, H02S 30/00

(54) **SOLAR CELL WALL OR ROOF STRUCTURE**

(30) Priority: 25.05.2022 LU 502168
(71) Applicant: Koddaert NV, 8680 Koekelare (BE)
(72) Inventor: DE JAEGHERE, Sam, 8300 KNOKKE-HEIST (BE); DECAESSTECKER, Matthias, 8310 SINT KRUIS (BE); HEYNDERICK, Bert, 8211 AARTRIJKE (BE)
(74) Representative: Aronova

(57) **Abstract**

The invention relates to a solar cell wall or roof structure. The solar cell wall or roof structure comprises a wall or roof panel (12) comprising first and second ribs (14, 16) and a central portion (18) between the first and second ribs, the first and second ribs protruding upwardly with respect to the central portion, each of the first and second ribs having an apex, the central portion having an upper surface. The structure further comprises a photovoltaic panel (20) having a back side and a fastener. The fastener comprises a first interconnecting part (22) bonded to the upper surface of the central portion of the wall or roof panel and a second interconnecting part (24) bonded to the back side of the photovoltaic panel. The fastener is configured to slidably fasten the photovoltaic panel on the wall or roof panel by sliding one of the first and second interconnecting parts in the other of the first the second interconnecting parts. The back side of the photovoltaic panel is optionally located below the apex of the first and second ribs. Other aspects relate to a method for producing a solar cell wall or roof structure, method for installing a solar cell wall or roof and a method for replacing the photovoltaic panel of a solar cell wall or roof.

## Description

### Field of the Invention

The invention generally relates to a solar cell wall or roof structure, and methods for producing and installing the same as well as a method for replacing the photovoltaic panel of a solar cell wall or roof.

### Background of the Invention

EP2395559 relates to a device having a roof element formed from a ribbed sheet comprising a series of ribs projecting from a base plane of the sheet. The series of ribs has end ribs placed on edges of the sheet, support ribs placed between collection ribs, and stiffening ribs placed between the support ribs. A solar collector plate *i. e*. photovoltaic module, is rested on the support ribs. The support ribs extend in projection with respect to other ribs of the sheet in a prominent manner and form a mounting surface of the plate by gluing, so that the plate extends away from the latter ribs.

US2017237387 relates to building integrated photovoltaic (BIPV) systems that provide for solar panel arrays that can be aesthetically pleasing and appear seamless to an observer. BIPV systems can be on-roof systems, elevated from the surface of a roof, being flush or forming a substantively uniform plane with roof panels or other panels mimicking a solar panel appearance. Pans supporting BIPV solar panels can be coupled by standing seams to other photovoltaic-supporting pans or pans supporting non-photovoltaic structures, having both functional and aesthetic advantages.

CN214995288 discloses a roof gluing renovation structure which comprises a metal roof, the metal roof comprises a metal roof board, a waterproof layer is bonded on the metal roof board through an adhesive, and the waterproof layer is fully bonded and covers the metal roof board. A flexible support is mounted on the waterproof layer, and the bottom of the flexible support is welded and fixed to the waterproof layer; a photovoltaic support is installed on the flexible support, and a photovoltaic assembly is installed on the photovoltaic support. According to the roof gluing renovation structure, the waterproof roll is laid on the metal roof, the service life of the metal roof board is prolonged, the photovoltaic assembly is further installed on the metal roof, and reliable application of photovoltaic power generation on the metal roof is achieved.

### General Description

An aspect of the invention relates to a solar cell wall or roof structure. The solar cell wall or roof structure comprises a wall or roof panel comprising first and second ribs and a central portion between the first and second ribs, the first and second ribs protruding upwardly with respect to the central portion, each of the first and second ribs having an apex, the central portion having an upper surface. The structure further comprises a photovoltaic panel having a back side and a fastener. The fastener comprises a first interconnecting part bonded to the upper surface of the central portion of the wall or roof panel and a second interconnecting part bonded to the back side of the photovoltaic panel. The fastener is configured to slidably fasten the photovoltaic panel on the wall or roof panel by sliding one of the first and second interconnecting parts in the other of the first the second interconnecting parts. Optionally, the back side of the photovoltaic panel is located below the apex of the first and second ribs.

As is customary in the art, a photovoltaic panel comprise a front side where the solar cells are located. In use, the solar cells are facing the sky. The back side of a photovoltaic panel is the side that is opposite to the front side and generally facing the panels or tiles of the wall or roof. Throughout the document, every reference to a direction is with respect to this convention. For example, an upward protrusion is a protrusion that protrudes in direction of the sky.

As used herein, the "apex" is the top or highest part of the ribs.

As used herein, "bonded" refers to a connection between two entities (e. *g.* the first interconnecting part and the upper surface of the central portion of the wall or roof panel) that have been joined together by means of adhesive, heating, welding, clinching and/or pressing.

It will be appreciated that the solar cell wall or roof structure has several advantages over the solutions of the prior art. A first advantage is that the fastener is located between the back side of the photovoltaic panel and the wall or roof panel, thereby avoiding any cluttering of the front surface of the photovoltaic panel. In other words, the fastener does not decrease the solid angle from which photons can be absorbed by the photovoltaic panel. Also, the fastening of the photovoltaic panel is very easy, as only sliding one of the first and second interconnecting parts in the other of the first the second interconnecting parts is necessary for fastening the photovoltaic panel on the wall or roof panel. It will also be appreciated that the solar cell wall or roof structure offers a better durability than the solution proposed by the prior art in the sense that the photovoltaic panel is better protected from high wind conditions because the back side of the photovoltaic panel is located below the apex of the first and second ribs. Indeed, the air flow below the back side of the photovoltaic panel is greatly reduced because the back side of the photovoltaic panel is located below the apex of the first and second ribs.

A further advantage of the present invention is that the solar cell wall or roof structure may be produced in its entirety in a workshop. Installation, on site, is thus greatly facilitated.

In an embodiment, the photovoltaic panel is located below the apex of the first and/or second ribs, preferably both. In particular, the back side of the photovoltaic panel is located below the apex of the first and/or second ribs, preferably both ribs.

The fastener may comprise an additional interconnecting part being either bonded to the upper surface of the central portion of the wall or roof panel or to the back side of the photovoltaic panel, wherein the fastener is configured to slidably fasten the photovoltaic panel on the wall or roof panel by (also) sliding the additional interconnecting part in either the first or the second interconnecting parts.

In an embodiment, one of the first interconnecting part or the second interconnecting part comprises a profile, preferably the profile is a steel profile, a stainless steel profile, an aluminium profile, a PVC profile a carbon-fibre profile or a composite profile, the profile having a longitudinal axis, the longitudinal axis of the profile being parallel or perpendicular to the longitudinal axis of the photovoltaic panel.

The first interconnecting part or the second interconnecting part may comprise a tongue, the other of the first interconnecting part or the second interconnecting part comprising a space, an aperture or a recess for receiving the tongue, the tongue being configured to slide into the space, the aperture or the recess of the other of the first interconnecting part or the second interconnecting part thereby fastening the photovoltaic panel on the wall or roof panel.

In an embodiment, the fastener is a floating fastener thereby allowing for relative movement between the fastened wall or roof panel and the photovoltaic panel. It will be appreciated that a floating fastener allows for relative movement between wall or roof panel and the photovoltaic panel while the same remain fastened by the fastener. This offers the advantage of being able to accommodate for different thermal expansion coefficients for the photovoltaic panel and the wall or roof panel.

The solar cell wall or roof structure may comprise a plurality of fasteners, each having a first interconnecting part bonded to the upper surface of the central portion of the wall or roof panel and a second interconnecting part bonded to the back side of the photovoltaic panel.

At least one of the first and second interconnecting parts may be bonded by an adhesive.

The first interconnecting part or the second interconnecting part may comprise:
∘ a first portion bonded to the upper surface of the central portion of the wall or roof panel or the back side of the photovoltaic panel;
∘ a second portion in (preferably direct) contact with the other of the first interconnecting part or the second interconnecting part;
∘ optionally, an abutment portion configured to abut the other of the first interconnecting part or the second interconnecting part;
∘ optionally, a guiding portion for guiding the first interconnecting part or the second interconnecting part in the other of the first interconnecting part or the second interconnecting part.

The angle between the first portion and the second portion may be convex or concave.

The solar cell wall or roof structure may further comprise a locking arrangement comprising:
∘ a first interlocking part bonded to the upper surface of the central portion of the wall or roof panel; and
∘ a second interlocking part bonded to the back side of the photovoltaic panel, the second interlocking part being mounted to the first interlocking part;
∘ wherein the mounting of the second interlocking part to the first interlocking part locks the photovoltaic panel on the wall or roof panel by sterically precluding unfastening of the fastener.

The second interlocking part may be mounted to the first interlocking part by at least one of one or more rivets and bolts.

The solar cell wall or roof structure may further comprise a gap between the photovoltaic panel and the wall or roof panel, the photovoltaic panel being preferably not in direct contact with the wall or roof panel. It will be appreciated that the gap allows for flushing heat thereby mitigating heating of the photovoltaic panel by the heat absorbed by the wall or roof panel. Also, the gap may be used to accommodate electrical wires of the photovoltaic panel thereby hiding them.

The solar cell wall or roof structure may further comprise a gap between the ribs and the photovoltaic panel.

In an embodiment, wherein at least one of the first interconnecting part and second interconnecting part comprises a resilient material (e. *g.* rubber, neoprene, silicone) for contacting the other of the first interconnecting part and second interconnecting part and/or the back side of the photovoltaic panel. It will be appreciated that the resilient material provides an improved acoustic isolation between the photovoltaic panel and the wall or roof panel.

In an embodiment, the solar cell wall or roof structure further comprises an electrical junction box arranged on the back side of the photovoltaic panel. In an embodiment, the electrical junction box may be (integrally, completely) integrated in photovoltaic panel.

Preferably, at least one of the first and second ribs comprises a lip on a side opposite to the central portion for fixing the solar cell wall or roof structure to a wall or roof support.

Preferably, the first and second ribs are complementary, the first rib being configured to snap the second rib. This allows for connecting multiple solar cell wall or roof structures easily.

An aspect of the present invention relates to a method for producing the solar cell wall or roof structure. The method, comprises:
∘ providing a wall or roof panel comprising first and second ribs and a central portion between the first and second ribs, the first and second ribs protruding upwardly with respect to the central portion, each of the first and second ribs having an apex, the central portion having an upper surface;
∘ providing a photovoltaic panel having a back side;
∘ bonding a first interconnecting part to the upper surface of the central portion of the wall or roof panel and bonding second interconnecting part to the back side of the photovoltaic panel so as to provide a fastener;
∘ fastening the photovoltaic panel on the wall or roof panel by sliding one of the first and second interconnecting parts in the other of the first the second interconnecting parts, the fastener thereby fastening the photovoltaic panel on the wall or roof panel;
∘ wherein the back side of the photovoltaic panel is located below the apex of the first and second ribs.

A further aspect of the present invention relates to a method for installing a solar cell wall or roof, comprising:
∘ providing a solar cell wall or roof structure as described herein, wherein at least one of the first and second ribs comprises a lip on a side opposite to the central portion for fixing the solar cell wall or roof structure to a wall or roof support; and
∘ mounting the lip on a wall or roof support so as to provide solar cell wall or roof.

The provided solar cell wall or roof structure, may have the first rib configured to snap the second rib. The method may comprise providing a second solar cell wall or roof structure according to the present document, having at least one of the first and second ribs comprises a lip on a side opposite to the central portion for fixing the solar cell wall or roof structure to a wall or roof support the first and second ribs are complementary, the first rib being configured to snap the second rib. The method further comprising snapping the first rib of the second solar cell wall or roof structure on the second rib of the provided solar cell wall or roof structure, thereby locking the provided solar cell wall or roof structure to the second solar cell wall or roof structure.

The lip of the second solar cell wall or roof structure may be covered by the provided solar cell wall or roof structure.

A further aspect of the present invention relates to a method for replacing the photovoltaic panel of the solar cell wall or roof. The method comprises:
∘ unmounting the second interlocking part from the first interlocking part of the locking arrangement;
∘ sliding one of the first and second interconnecting parts out the other of the first the second interconnecting parts, thereby unfastening the photovoltaic panel from the wall or roof panel;
∘ providing a photovoltaic panel having a back side and a second interconnecting part being bonded to the back side, the second interconnecting being configured to slidably fasten the photovoltaic panel on the wall or roof panel by sliding in the first interconnecting part bonded to the wall or roof panel.
∘ fastening the provided photovoltaic panel on the wall or roof panel by sliding one of the first and second interconnecting parts in the other of the first the second interconnecting parts, the fastener thereby fastening the provided photovoltaic panel on the wall or roof panel.

It is worthwhile noting that, in all aspects of the present invention, the fastener may be configured to removably fasten the photovoltaic panel on the wall or roof panel. Also, in all aspects of the present invention, the bonding of one or more of the parts of the fastener and/or of one or more of the parts of the interlocking arrangement may be effected by an adhesive, heating, welding, clinching and/or pressing.

In the present document, the verb "to comprise" and the expression "to be comprised of" are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When reference is made to "an embodiment", "one embodiment", "embodiments", etc., this means that these embodiments may be combined with one another. An embodiment may relate to the various aspects of the invention unless it is clear from context that it is incompatible with a specific aspect. Furthermore, the features of the embodiments can be used in the combination explicitly presented but also that the features can be combined across embodiments without departing from the invention, unless it follows from context that features cannot be combined.

### Brief Description of the Drawings

By way of example, preferred, non-limiting embodiments of the invention will now be described in detail with reference to the accompanying drawings, in which:
**Fig. 1****:** is schematic representation of a solar cell wall or roof structure 10 according to an embodiment of the present invention;
**Fig. 2****:** is a cross section schematic representation of the wall or roof panel;
**Fig. 3****:** is a cross section schematic representation of two wall or roof panels;
**Fig. 4****:** shows a simplified view of a first interconnecting part;
**Fig. 5****:** shows a simplified view of a first interconnecting part;
**Fig. 6****:** shows a simplified view of a second interconnecting part;
**Fig. 7****:** shows a simplified view of a second interconnecting part;
**Fig. 8****:** is longitudinal cross-sectional schematical illustration of a solar cell wall or roof structure, in particular of the fastener;
**Fig. 9****:** is longitudinal cross-sectional schematical illustration of a solar cell wall or roof structure, in particular of the fastener;
**Fig. 10****:** is longitudinal cross-sectional schematical illustration of a solar cell wall or roof structure, in particular of the locking arrangement; and
**Fig. 11****:** is longitudinal cross-sectional schematical illustration of a solar cell wall or roof structure, in particular of the locking arrangement.

The reader's attention is drawn to the fact that the drawings are not to scale. Furthermore, for the sake of clarity, proportions between height, length and/or width may not have been represented correctly.

### Detailed Description of Preferred Embodiments of the Invention

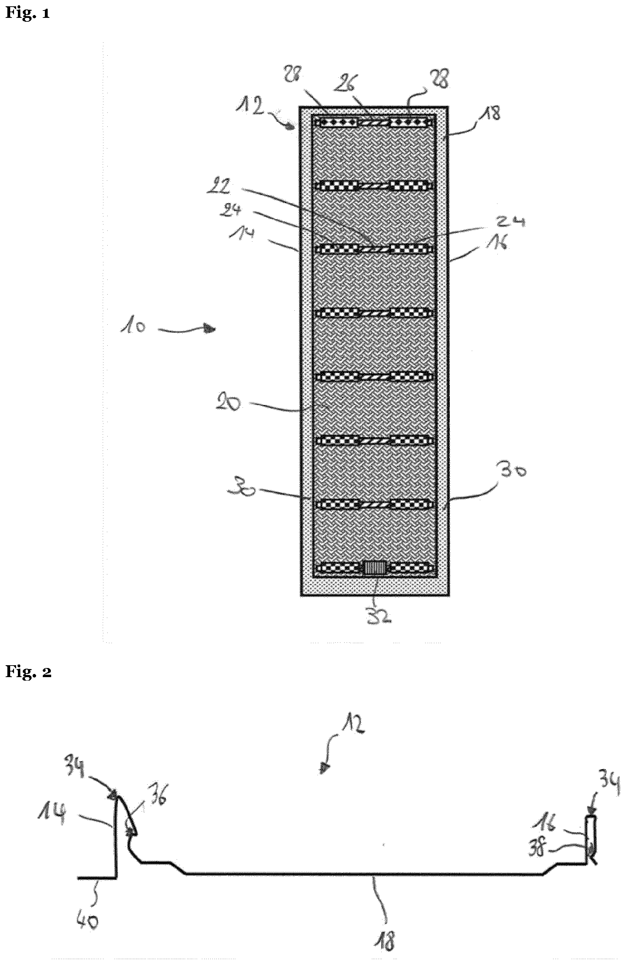

Fig. 1 is a schematic representation of a solar cell wall or roof structure 10 according to an embodiment of the present invention. Fig. 1 depicts a wall or roof panel 12 comprising first and second ribs 14, 16 and a central portion 18 between the first and second ribs 14, 16. The solar cell wall or roof structure 10 further comprises a photovoltaic panel 20 which is fastened to the wall or roof panel 12 by a fastener, the fastener comprising a first interconnecting part 22 bonded to the central portion of the wall or roof panel and a second interconnecting part 24 bonded to the photovoltaic panel 20. As depicted in Fig. 1 the photovoltaic panel 20 may be fastened to the wall or roof panel 12 by a plurality of fasteners in the same way. Also as depicted in Fig. 1, the fastener may comprise a plurality of second interconnecting parts 24 bonded to the photovoltaic panel 20. In particular, the fastener may comprise from 1 to 7 second interconnecting parts 24, preferably 2 to 5 second interconnecting parts 24. The solar cell wall or roof structure 10 may also comprise a locking arrangement. The locking arrangement comprises a first interlocking part 26 bonded to the central portion 18; and a second interlocking part 28 bonded to the photovoltaic panel 20. The second interlocking part 28 is mounted to the first interlocking part 26. In the same way as for the fasteners, the locking arrangement may comprise a plurality of second interlocking parts 28. Of course, in embodiments, the first and second interconnecting parts may be interchanged, *i*. *e*. the solar cell wall or roof structure 10 may comprise a plurality of first interconnecting parts. The same applies to the interlocking parts.

The photovoltaic panel 20 may be rigid or flexible. As used herein, the term "flexible" designates a photovoltaic panel that can be bent to a diameter of curvature of 2 m, preferably to a radius of curvature of 1 m, or even to a smaller radius of curvature, without visible deterioration.

The fastener may be separated by a distance comprised in the range from 100 mm to 1000 m, preferably from 250 mm to 750 mm, even more preferably from 300 mm to 650 mm.

The photovoltaic panel 20 may have a width comprised in the range from 250 mm to 1500 m, preferably from 400 mm to 1000 mm, even more preferably from 500 mm to 800 mm. The photovoltaic panel 20 may have a length comprised in the range from 500 mm to 10000 mm, preferably from 600 mm to 3000 mm, even more preferably from 800 mm to 2000 mm.

The ratio between the length and the width of the photovoltaic panel 20 (and possibly the wall or roof panel 12) maybe comprised in the range from 1 to 7, preferably from 1.5 to 6, even more preferably from 2 to 3.

While, in Fig. 1, the longitudinal axis of the first interconnecting part 22 is perpendicular to the longitudinal axis of photovoltaic panel 20, other relative angles are contemplated. For example, the longitudinal axis of the first interconnecting part 22 may be parallel to the longitudinal axis of the photovoltaic panel 20. In some embodiments, the longitudinal axis of the photovoltaic panel 20 may be parallel to the longitudinal axis of the first and/or second ribs 14, 16, the longitudinal axis of the first and second ribs 14, 16 preferably being parallel.

In an embodiment, the solar cell wall or roof structure 10 comprises a gap 30 between the ribs 14, 16 and the photovoltaic panel 20. The gap allows for creating a channel between the ribs 14, 16 and the photovoltaic panel 20. The channel may be used *e*. *g.* for accommodating electrical wires and/or other utilities. In an embodiment, two channels are provided, on both sides of the photovoltaic panel 20 between the respective ribs 14, 16.

In embodiments, the distance between the ribs and the photovoltaic panel 20 (*i. e*. the gap) is comprised in the range from 1 mm to 70 mm, preferably from 5 mm to 60 mm, even more preferably from 10 mm to 50 mm.

The solar cell wall or roof structure 10 may further comprise an electrical junction box 32. The junction box 32 may be located between the photovoltaic panel 20 and the wall or roof panel 12.

The fastener is configured to slidably fasten the photovoltaic panel 20 on the wall or roof panel 12 by sliding one of the first and second interconnecting parts in the other of the first the second interconnecting parts. The mounting of the second interlocking part 28 to the first interlocking part 26 locks the photovoltaic panel 20 on the wall or roof panel 12 by sterically precluding unfastening of the fastener. The photovoltaic panel 20 is thereby firmly locked to the wall or roof panel 12.

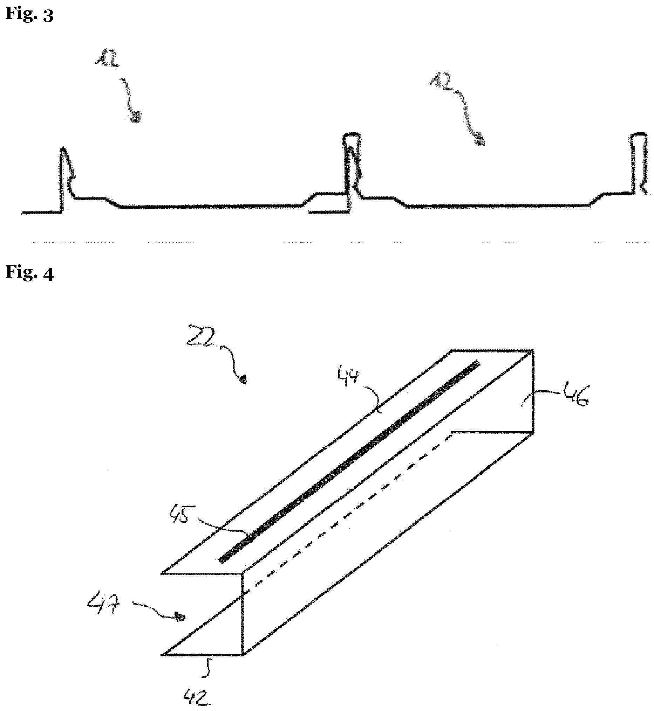

With reference to Fig. 2 depicting a cross section of the wall or roof panel 12 comprising the first and second ribs 14, 16 and the central portion 18 between the first and second ribs 14, 16, according to an embodiment. Each of the ribs 14, 16 has an apex 34. Preferably, the first and second ribs 14, 16 are complementary, the first rib 14 being preferably configured to snap the second rib 16 (as shown in Fig. 3) Once snapped, the wall or roof panels 12 are securely locked together by the respective abutment surfaces 36, 38 of the ribs 14, 16.

At least one of the first and second ribs may comprise a lip 40 located on a side opposite to the central portion 18 for fixing the solar cell wall or roof structure 10 to a wall or roof support (not depicted). The fixing may be effected by one or more bolts and/or rivets or the like going through the lip 40 and in the wall or roof support.

The back side of the photovoltaic panel may be located below the apex of at least one of the first and second ribs, preferably both of the first and second ribs.

The first and second interconnecting parts 22, 24 and/or the first and second interlocking parts 26, 28 may be made of (or partially made of) steel, stainless steel, aluminium, PVC, carbon-fibre, and/or a composite.

With reference to Fig. 4 schematically depicting a first interconnecting part 22 which is a profile whose section is generally in the form of a "C". The profile comprises two flanges 42, 44 for contacting the upper surface of the central portion 18 and the lower surface of the photovoltaic panel 20, respectively. The two flanges 42, 44 are connected through a spacing web 46. Flange 44 may further comprise a resilient material 45 (*e*. *g.* rubber, neoprene, silicone) for contacting the back side of the photovoltaic panel 20. The profile provides a space 47 in between the flanges 42, 44 for receiving the second interconnecting part 24.

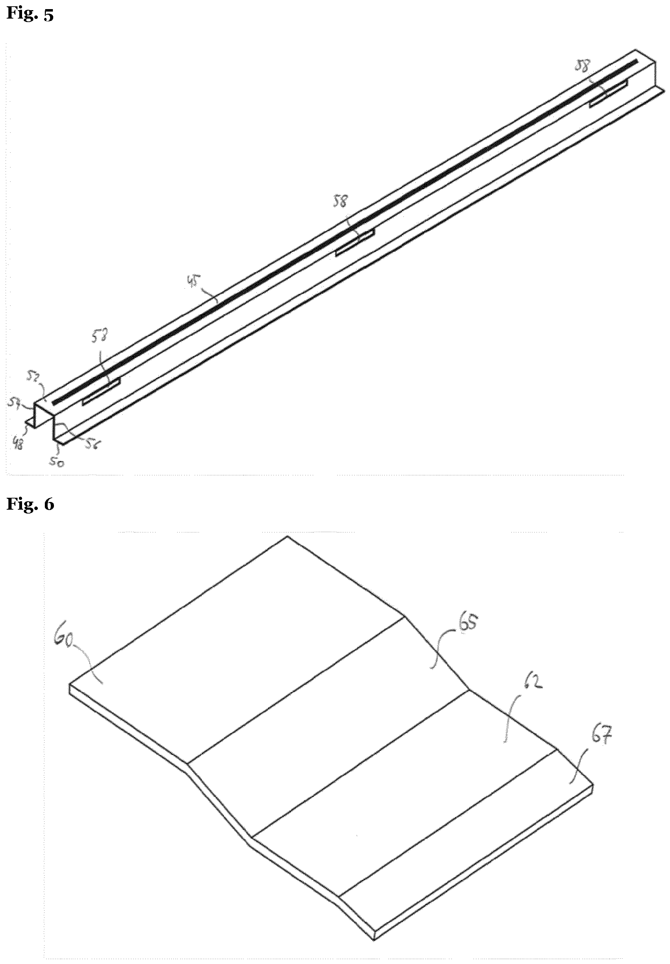

Fig. 5 depicts another possible profile for the first interconnecting part 22, which is generally in the form of a hat. The profile comprises two lower flanges 48, 50 and an upper flange 52. The lower flange 48 is connected to the upper flange through a first web 54 and the lower flange 50 is connected to the upper flange 52 through a second web 56. One of the two web 54, 56 (or both) comprises one or more apertures 58 for receiving the second interconnecting part 24. Resilient material 45 is provided to the upper flange 52, as in the embodiment of Fig. 4.

In an embodiment a boxed profile maybe used. Here also, one or more apertures 58 for receiving the second interconnecting part 24 are provided.

In an embodiment, as depicted in Fig. 6, the second interconnecting part 24 may comprise a first portion 60 which is configured to be bonded to the back side of the photovoltaic panel 20 (or the upper surface of the central portion 18 in case the role of the first and second interconnecting parts are interchanged). The second interconnecting part 24 may comprise a second portion 62 for contacting (possibly for directly contacting) with the first interconnecting part 22. The angle between first and second portions 60, 62 is convex. Also, an abutment portion 65 is provided to the second interconnecting part 24. The abutment portion 65 may be configured to abut the first interconnecting when fastened. The abutment portion 65 may join the first and second portions 62. In addition, the second interconnecting part 24 may be provided with a guiding portion 67 for guiding the second interconnecting part 24 in the first interconnecting part 22.

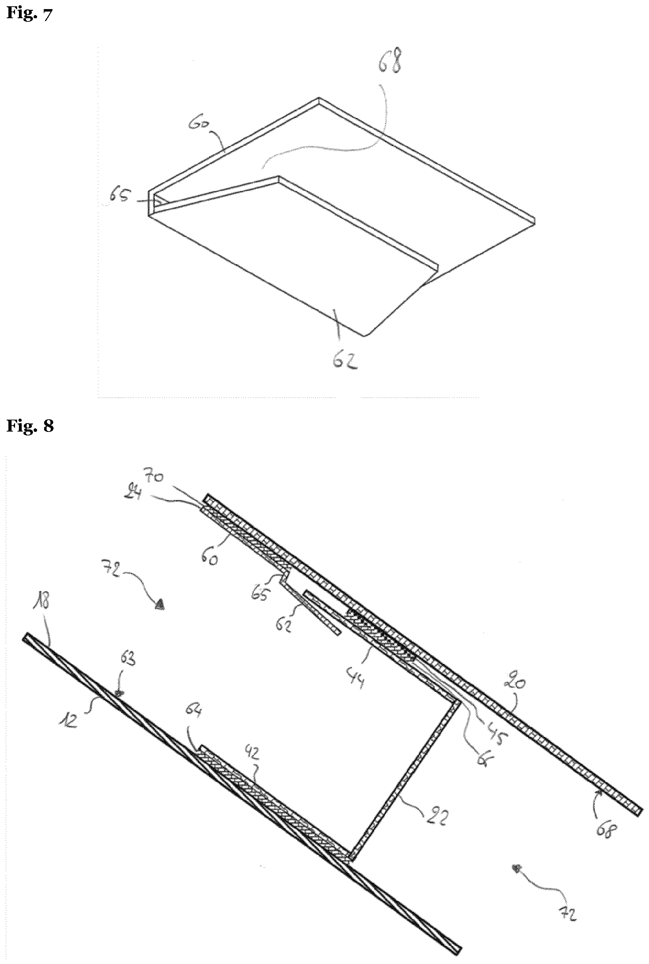

Fig. 7 illustrates a further embodiment of the second interconnecting part 24. The second interconnecting part 24 differs from the embodiment depicted in Fig. 6 only in that the angle between the first and second portions 60, 62 is different. In particular, in Fig. 7, the angle is such that an interstitial space 68 is provided between the first and second portions 60, 62. In other words, the angle between first and second portions 60, 62 is concave. Here also, the second interconnecting part 24 may be provided with a guiding portion for guiding the second interconnecting part 24 in the first interconnecting part 22.

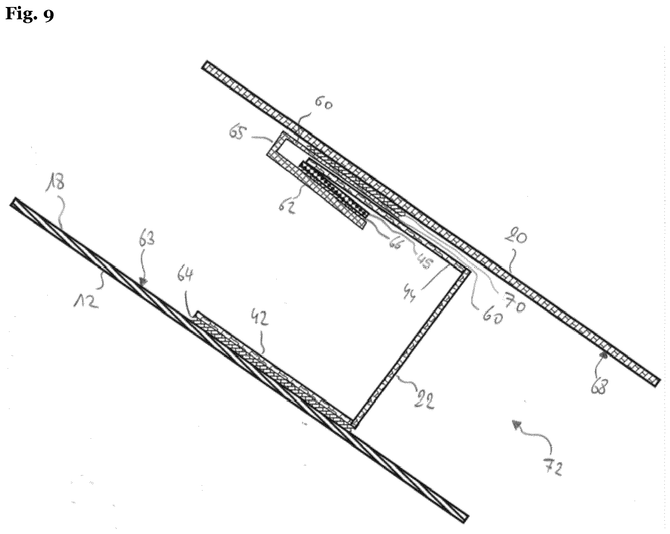

Fig. 8 is a longitudinal cross-sectional schematical illustration of a solar cell wall or roof structure 10 according to an embodiment of the present invention. The wall or roof panel 12 is bonded to the first interconnecting part 22 being a profile generally in the form of a "C". The wall or roof panel 12 may be bonded to the profile 22 (in particular the upper surface 63 of the wall or roof panel 12 is bonded to -lower surface of- the lower flange 42 by an adhesive 64. Also, a resilient material 45 may be bonded to the profile 22 (in particular to its upper flange 44), e. *g.* by an adhesive 66. In an embodiment, the adhesive 66 may be dispensed with in case the resilient material 45 is self-adhesive The second interconnecting part 24, in particular portion 60 is bonded to the back side 68 of the photovoltaic panel 20 by an adhesive 70. In the present embodiment, the second interconnecting part 24 is the one depicted in Fig. 6, without the guiding portion 67. Of course, the guiding portion may be provided. Alternatively or additionally a resilient material may be provided to second portion 62 for (directly) contacting the flange 44, as e.g. in the case of Fig. 9.

The photovoltaic panel 20 with the second interconnecting part 24 may slide in the first interconnecting part 22. In particular, the second portion 62 slides below the upper flange 44 thereby fastening the photovoltaic panel 20 on the wall or roof panel 12. The second portion 62 may or may not be in (direct) contact with the upper flange 44. The abutment portion 64 may provide haptic feedback to the user sliding the photovoltaic panel 20, indicating, in case of abutment, that the photovoltaic panel 20 is fastened. The guiding portion 67, when provided, may help the user to guide the second interconnecting part 24 below the upper flange 44.

It will be appreciated that the fastener allows for an easy unfastening of the photovoltaic panel 20 by sliding the photovoltaic panel 20 in the opposite way that was used for fastening the photovoltaic panel 20 to the wall or roof panel 12.

It should further be noted that the resilient material 45 allows for improving sound dampening between the photovoltaic panel 20 and the wall or roof panel 12.

It will further be appreciated that the fastener allows for providing a gap 72 between the photovoltaic panel 20 and the wall or roof panel 12. This allows for a better air circulation as well as better water drainage. In addition, with respect to the prior solutions where the photovoltaic panel is directly glued to the roof panel, this offers a better durability of the photovoltaic panel due to the differing thermal expansion coefficients of the photovoltaic panel and wall or roof panel. A further advantage of the present invention is that the fastener allows for small translations between the photovoltaic panel 20 and the wall or roof panel 12, thereby allowing for differential thermal expansion of the photovoltaic panel 20 and the wall or roof panel 12 while still ensuring that the fastener remains fastened. In other words, the fastener is a floating fastener. Better air flow and water drainage between the wall or roof panel and the photovoltaic panel is also to be expected.

The distance between the photovoltaic panel 20 and the wall or roof panel 12 is comprised in the range from 10 mm to 50 mm, preferably from 15 mm to 30 mm, even more preferably from 25 mm to 35 mm.

Fig. 9 is a longitudinal cross-sectional schematical illustration of a solar cell wall or roof structure 10 according to an embodiment of the present invention. The embodiment of Fig. 9 differs from the one depicted in Fig. 8, in that the second interconnecting part 24 is according to the one depicted in Fig. 7. In this case, the upper flange 44 may accommodate the interconnecting part 24 as well as the resilient material 45. In the present embodiment, resilient material 45 is arranged on second portion 62 or contacting the lower surface of flange 44. Resilient material 45 may additionally (or alternatively) be provided as in Fig. 8, *i. e*. on the upper surface of flange 44 for contacting the back side 68 of the photovoltaic panel 20. Of course, the resilient material maybe dispensed with.

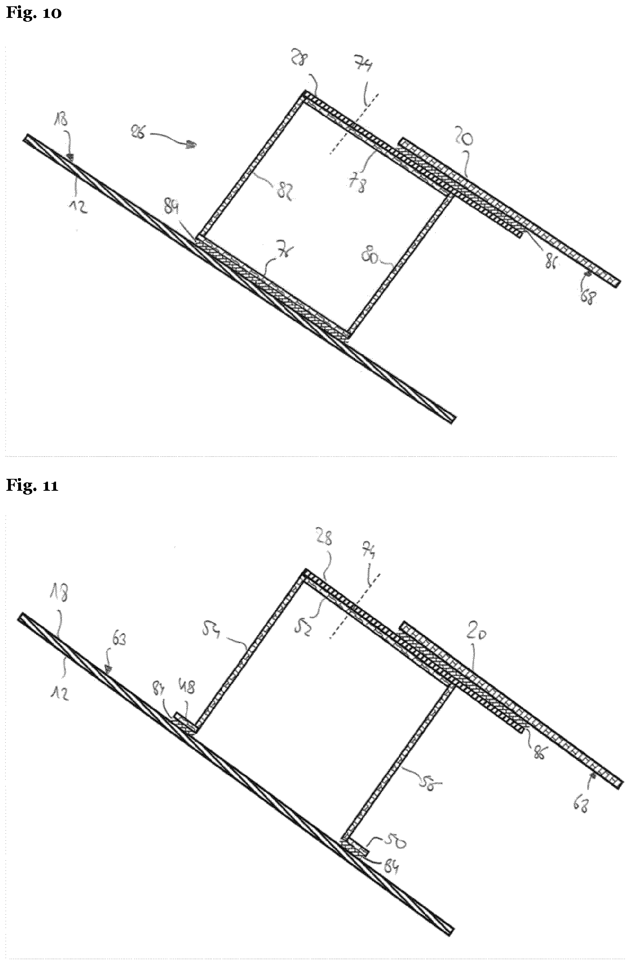

Fig. 10 is a longitudinal cross-sectional schematical illustration of a solar cell wall or roof structure 10 according to an embodiment of the present invention. In particular, Fig. 10 shows the locking arrangement comprising a first interlocking part 26 bonded to the upper surface of the central portion of the wall or roof panel and a second interlocking part 28 bonded to the back side of the photovoltaic panel, the second interlocking part being mounted to the first interlocking part 26.

In the present embodiment, the first interlocking part 26 is a boxed profile. The boxed profile comprises a lower flange 76, an upper flange 78 and two upright flanges 80, 82 connecting the lower and upper flanges 76, 78 so as to form a boxed profile (*i. e*. a rectangular profile). Other profiles, such as the one described in the present document are also contemplated.

The first interlocking part 26 is bonded to the upper surface of the central portion of the wall or roof panel. In particular, a lower flange 76is bonded to the central portion of the wall or roof panel 12 *e*. *g.* by an adhesive 84. The second interlocking part 28 is bonded to the back side 68 of the photovoltaic panel *e*. *g.* by an adhesive 86. The second interlocking part 28 may be a plate. The plate may be made of (or partially made of) steel, stainless steel, aluminium, PVC, carbon-fibre, and/or a composite.

The mounting of the second interlocking part 28 to the first interlocking part 26 may be effected by one or more rivets and/or bolts 74 going through both of the second interlocking part 28 to the first interlocking part 26 (in particular the upper flange 78) thereby securing both parts 26, 28 together. The locking arrangement may be provided at a longitudinal end of the photovoltaic panel 20 in such a way that the one or more rivets and/or bolts 74 are located next to the photovoltaic panel 20. In other words, the one or more rivets and/or bolts 74 are not covered by the photovoltaic panel 20.

The mounting sterically precludes unfastening of the fastener. It is not possible to slide the photovoltaic panel 20 when the locking arrangement locks the photovoltaic panel 20 to the wall or roof panel 12.

Should unfastening of the photovoltaic panel 20 be needed, the first interlocking part 26 and the second interlocking part 28 may be unmounted, for example the one or more rivets and/or bolts 74 may be removed so that unfastening is again possible. This is particularly advantageous for securely mounting the photovoltaic panel 20 during it use while still allowing for fast and easy replacement of the same, *e. g.* in case of failure of the same.

Fig. 11 is a longitudinal cross-sectional schematical illustration of a solar cell wall or roof structure 10 according to an embodiment of the present invention. The embodiment differs from the one depicted in fig. 10 in that another profile is used as first interlocking part 26. In the present embodiment, the first interlocking part 26 is a profile with a hat section. It is worthwhile noting that the profiles disclosed in the present may be used for the fastener and/or for the locking arrangement.

While specific embodiments have been described herein in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

## Claims

1. A solar cell wall or roof structure comprising:
a wall or roof panel comprising first and second ribs and a central portion between the first and second ribs, the first and second ribs protruding upwardly with respect to the central portion, each of the first and second ribs having an apex, the central portion having an upper surface;
a photovoltaic panel having a back side; and
a fastener comprising:
∘ a first interconnecting part bonded to the upper surface of the central portion of the wall or roof panel; and
∘ a second interconnecting part bonded to the back side of the photovoltaic panel;
wherein the fastener is configured to slidably fasten the photovoltaic panel on the wall or roof panel by sliding one of the first and second interconnecting parts in the other of the first and the second interconnecting parts;
wherein the back side of the photovoltaic panel is preferably located below the apex of the first and second ribs.

2. The solar cell wall or roof structure according to claim 1, wherein the fastener comprises an additional interconnecting part being either bonded to the upper surface of the central portion of the wall or roof panel or to the back side of the photovoltaic panel, wherein the fastener is configured to slidably fasten the photovoltaic panel on the wall or roof panel by sliding the additional interconnecting part in either the first or the second interconnecting parts.

3. The solar cell wall or roof structure according to any one of claims 1 to 2, wherein one of the first interconnecting part or the second interconnecting part comprises a profile, preferably the profile is a steel profile, the profile having a longitudinal axis, the longitudinal axis of the profile being parallel or perpendicular to the longitudinal axis of the photovoltaic panel.

4. The solar cell wall or roof structure according to any one of claims 1 to 3, wherein one of the first interconnecting part or the second interconnecting part comprises a tongue, the other of the first interconnecting part or the second interconnecting part comprising a space; an aperture or a recess for receiving the tongue, the tongue being configured to slide into the space, the aperture or the recess of the other of the first interconnecting part or the second interconnecting part thereby fastening the photovoltaic panel on the wall or roof panel.

5. The solar cell wall or roof structure according to any one of claims 1 to 4, wherein the fastener is a floating fastener thereby allowing for relative movement between the fastened wall or roof panel and the photovoltaic panel.

6. The solar cell wall or roof structure according to any one of claims 1 to 5, wherein the solar cell wall or roof structure comprises a plurality of fasteners, each having a first interconnecting part bonded to the upper surface of the central portion of the wall or roof panel and a second interconnecting part bonded to the back side of the photovoltaic panel.

7. The solar cell wall or roof structure according to any one of claims 1 to 6, wherein the first interconnecting part or the second interconnecting part comprises:
∘ a first portion bonded to the upper surface of the central portion of the wall or roof panel or the back side of the photovoltaic panel;
∘ a second portion in direct contact with the other of the first interconnecting part or the second interconnecting part;
∘ optionally, an abutment portion configured to abut the other of the first interconnecting part or the second interconnecting part;
∘ optionally, a guiding portion for guiding the first interconnecting part or the second interconnecting part in the other of the first interconnecting part or the second interconnecting part.

8. The solar cell wall or roof structure according to claim 7, wherein the angle between the first portion and the second portion is convex, or wherein the angle between the first portion and the second portion is concave.

9. The solar cell wall or roof structure according to any one of claims 1 to 8, further comprising a locking arrangement comprising:
∘ a first interlocking part bonded to the upper surface of the central portion of the wall or roof panel; and
∘ a second interlocking part bonded to the back side of the photovoltaic panel, the second interlocking part being mounted to the first interlocking part;
wherein the mounting of the second interlocking part to the first interlocking part locks the photovoltaic panel on the wall or roof panel by sterically precluding unfastening of the fastener, wherein the second interlocking part is preferably mounted to the first interlocking part by at least one of one or more rivets and bolts.

10. The solar cell wall or roof structure according to any one of claims 1 to 9, wherein the solar cell wall or roof structure further comprises a gap between the photovoltaic panel and the wall or roof panel, the photovoltaic panel being preferably not in direct contact with the wall or roof panel.

11. The solar cell wall or roof structure according to any one of claims 1 to 10, wherein at least one of the first interconnecting part and second interconnecting part comprises a resilient material for contacting the other of the first interconnecting part and second interconnecting part and/or the back side of the photovoltaic panel.

12. The solar cell wall or roof structure according to any one of claims 1 to 11, wherein at least one of the first and second ribs comprises a lip on a side opposite to the central portion for fixing the solar cell wall or roof structure to a wall or roof support.

13. The solar cell wall or roof structure according to any one of claims 1 to 17, wherein the first and second ribs are complementary, the first rib being configured to snap the second rib.

14. A method for producing a solar cell wall or roof structure according to any one of claims 1 to 13, comprising:
providing a wall or roof panel comprising first and second ribs and a central portion between the first and second ribs, the first and second ribs protruding upwardly with respect to the central portion, each of the first and second ribs having an apex, the central portion having an upper surface;
providing a photovoltaic panel having a back side;
bonding a first interconnecting part to the upper surface of the central portion of the wall or roof panel and bonding second interconnecting part to the back side of the photovoltaic panel so as to provide a fastener;
fastening the photovoltaic panel on the wall or roof panel by sliding one of the first and second interconnecting parts in the other of the first and the second interconnecting parts, the fastener thereby fastening the photovoltaic panel on the wall or roof panel;
wherein the back side of the photovoltaic panel is preferably located below the apex of the first and second ribs.

15. A method for installing a solar cell wall or roof, comprising:
providing a solar cell wall or roof structure according to claim 12; and
mounting the lip on a wall or roof support so as to provide solar cell wall or roof.

16. The method according to claim 15, the provided solar cell wall or roof structure being according to the combination of claims 12 and 13, providing a second solar cell wall or roof structure according to claim 18, snapping the first rib of the second solar cell wall or roof structure on the second rib of the provided solar cell wall or roof structure, thereby locking the provided solar cell wall or roof structure to the second solar cell wall or roof structure, the lip of the second solar cell wall or roof structure being preferably covered by the provided solar cell wall or roof structure.

17. A method for replacing the photovoltaic panel of a solar cell wall or roof according to any one of claims 1 to 13, comprising:
unmounting the second interlocking part from the first interlocking part of the locking arrangement;
sliding one of the first and second interconnecting parts out the other of the first the second interconnecting parts, thereby unfastening the photovoltaic panel from the wall or roof panel;
providing a photovoltaic panel having a back side and a second interconnecting part being bonded to the back side, the second interconnecting being configured to slidably fasten the photovoltaic panel on the wall or roof panel by sliding in the first interconnecting part bonded to the wall or roof panel.
fastening the provided photovoltaic panel on the wall or roof panel by sliding one of the first and second interconnecting parts in the other of the first the second interconnecting parts, the fastener thereby fastening the provided photovoltaic panel on the wall or roof panel.
